# EUROPEAN PATENT APPLICATION

(11) **EP 2 937 769 A1**
(43) Date of publication of application: **28.10.2015**
(21) Application number: 13864886.0
(22) Date of filing: 13.12.2013
(51) Int. Cl.: G06F 3/048, H04M 1/00

(54) **TERMINAL DEVICE, INFORMATION PROCESSING METHOD AND PROGRAM**

(30) Priority: 20.12.2012 JP 2012278141
(71) Applicant: NEC Corporation, Tokyo 108-8001 (JP)
(72) Inventor: MUKAI Yoshitaka, Kawasaki-shi Kanagawa 211-8666 (JP)
(74) Representative: Vossius & Partner Patentanwälte Rechtsanwälte mbB
(86) International application number: PCT/JP2013/083474
(87) International publication number: WO 2014/097988

(57) **Abstract**

A terminal device includes a display control unit that displays on a display unit, a display flake having a predetermined form to produce a visual effect and an information flake which indicates that there is notification information to be communicated to a user, where the information flake has a form identical or similar to the form of the display flake. It is possible that information flakes corresponding to different items of the notification information are displayed and a type of the notification information and/or an amount of information for each item of the notification information are determined. Each information flake may be displayed on the display unit in a manner such that the information flake has one or both of color and size which changes according to the results of the above determination.

## Description

### TECHNICAL FIELD

The present invention relates to a terminal device, an information processing method, and a program which are utilized to display an image which creates a visual effect.

### BACKGROUND ART

Terminal devices such as mobile phones and smartphones have spread worldwide. Lots of people utilize communication tools such as email or SNS (Social Networking Service).

Patent Document 1 discloses a technique in which if an email is received while a terminal device is locked, the terminal device communicates the receipt of the email to the user.

### PRIOR ART DOCUMENT

### Patent Document

Patent Document 1: Japanese Unexamined Patent Application, First Publication No. 2008-236184

### DISCLOSURE OF INVENTION

### Problem to be Solved by the Invention

However, the technique of Patent Document 1 is a technique utilized to inform the user of reception of email or the like by means of characters, and thus the terminal device using this technique do not provide a visual effect to the user.

In light of the above circumstances, an object of the present invention is to provide a terminal device, an information processing method, and a program which can solve the above problem.

### Means for Solving the Problem

In order to achieve the above object, the present invention provides a terminal device comprising:
a display control unit that displays on a display unit, a display flake having a predetermined form to produce a visual effect and an information flake which indicates that there is notification information to be communicated to a user, where the information flake has a form identical or similar to the form of the display flake.

The present invention also provides an information processing method comprising:
displaying on a display unit, a display flake having a predetermined form to produce a visual effect and an information flake which indicates that there is notification information to be communicated to a user, where the information flake has a form identical or similar to the form of the display flake.

The present invention also provides a program utilized to make a computer of a terminal device function as:
a display control device that displays on a display unit, a display flake having a predetermined form to produce a visual effect and an information flake which indicates that there is notification information to be communicated to a user, where the information flake has a form identical or similar to the form of the display flake.

### Effect of the Invention

In accordance with the present invention, when each schedule or the reception of information such as email messages is communicated to the user, a visual effect can be provided to the user. Therefore, the notification information can be intuitively and easily communicated to the user.

### BRIEF DESCRIPTION OF THE DRAWINGS

Fig. 1 is a functional block diagram showing the minimum configuration of a terminal device 1 according to the present invention.
Fig. 2 is a diagram showing the configuration of the terminal device 1 according to a first embodiment of the present invention.
Fig. 3 is a diagram showing an example of an image displayed by the terminal device 1 according to the first embodiment on a display unit 11.
Fig. 4 is a diagram showing an operation flow of the terminal device 1 according to the first embodiment.
Fig. 5 is a diagram showing the configuration of the terminal device 1 according to a second embodiment of the present invention.
Fig. 6 is a diagram showing an example of an image displayed by the terminal device 1 according to the second embodiment on the display unit 11.
Fig. 7 is a diagram showing an operation flow of the terminal device 1 according to the second embodiment.
Fig. 8 is a diagram showing the configuration of the terminal device 1 according to a third embodiment of the present invention.
Fig. 9 is a diagram showing an example of an image displayed by the terminal device 1 according to the third embodiment on the display unit 11.
Fig. 10 is a diagram showing the unlocking icon 101, the information flakes, and the application activation icons shown in part (b) of Fig. 9.
Fig. 11 is an example of display of the display unit 11 when an information flake is selected.
Fig. 12 is a diagram showing an operation flow of the terminal device 1 according to the third embodiment.
Fig. 13 is a diagram showing an operation flow of the terminal device 1 according to a fourth embodiment of the present invention.

### MODE FOR CARRYING OUT THE INVENTION

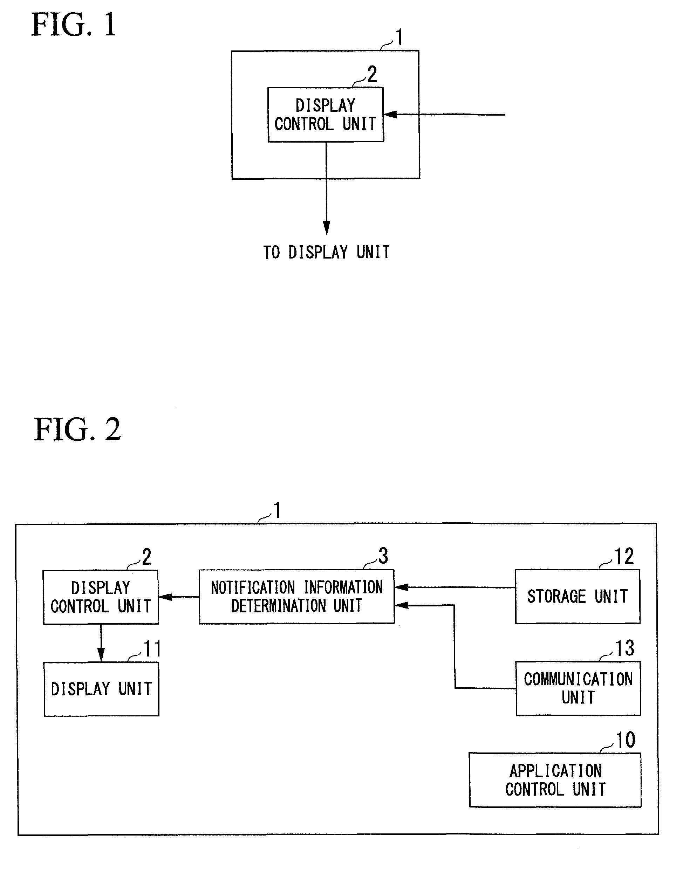

Fig. 1 is a functional block diagram showing the minimum configuration of a terminal device 1 according to the present invention.

As shown in Fig. 1, the terminal device 1 has at least a display control unit 2 as a functional unit.

Here, the display control unit 2 is a functional unit that is capable of displaying various kinds of display information on a predetermined display unit, as well as displaying a display flake (i.e., a flake-like figure to be displayed) having a predetermined form to produce a decorative effect.

This functional unit is also capable of displaying an information flake on the display unit, where the information flake is displayed on part of the display flake or another flake which is additionally displayed, and the information flake indicates that notification information to be communicated to the user is present.

The display flake is a flake that is displayed on the display unit in advance even when no notification information is present. Additionally, the information flake is a flake whose form is identical or similar to that of the display flake.

### First embodiment

Fig. 2 is a diagram showing the configuration of the terminal device 1 according to a first embodiment of the present invention.

As shown in Fig. 2, in addition to the display control unit 2 of Fig. 1, the terminal device 1 according to the first embodiment has a notification information determination unit 3, an application control unit 10, a display unit 11, a storage unit 12, and a communication unit 13.

The display control unit 2 according to the first embodiment displays various display information on the display unit 11. Furthermore, the display control unit 2 is a functional unit that displays an information flake on the display unit 11 in a manner such that in response to either one or both the type of the notification information and the amount of information for the notification information, which is determined by the notification information determination unit 3, either one or both of the color or size of the information flake changes.

The notification information determination unit 3 is a functional unit that performs determination about one or both the type of the notification information and the amount of information for the notification information.

The application control unit 10 is a control unit utilized to control each application program.

The display unit 11 is a display unit which displays various information items such as display flakes, information flakes information, application activation icons, and the like.

The application activation icons are each an icon as an operation target to execute an individual application program, that is, one of application activation display objects.

In other words, each icon in the present embodiment is an example of display objects.

The storage unit 12 is a storage unit that stores individual application programs, contents, and the like.

The communication unit 13 is a communication unit utilized to communicate with other devices.

Each functional unit provided in the terminal device 1 may be implemented in the terminal device 1 when a CPU (Central Processing Unit) executes a program recorded in the storage unit 12.

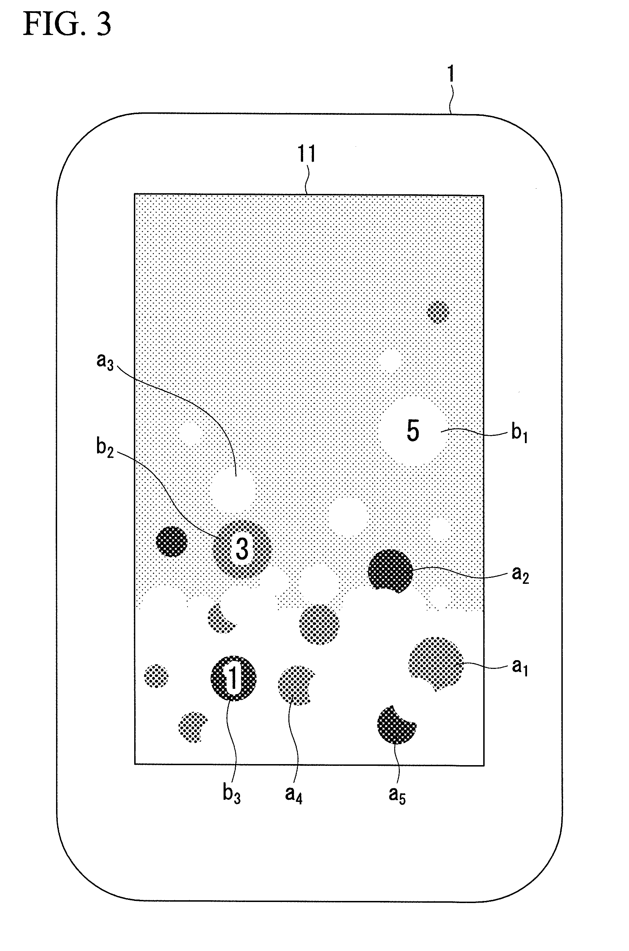

Fig. 3 is a diagram showing an example of an image displayed by the terminal device 1 according to the first embodiment on the display unit 11.

In Fig. 3, aₘ (m = 1, 2, ...) shows each display flake (i.e., a flake-like figure to be displayed). In addition, bₙ (n = 1, 2, ...) shows each information flake (i.e., a flake-like figure for information). The display flake and the information flake are each displayed on the display unit 11 as an circular image whose size and color are each not constant. In the example of Fig. 3, some circular images are overlapped with each other so that part of an image is visually missing.

In addition, each display flake is an image which is displayed on the display unit 11 even when there is no notification information, that is, even when no information flake is displayed. Thus the display flake is an image which gives a visual effect to the user.

On the other hand, each information flake is an image that shows the notification information utilized to notify the user that email or other information has been received. This information flakes represents the type of the notification information, such as telephone, email, short message, SNS, or schedule, by utilizing, for example, different colors, and also represents the number of notification cases (items) for each type by utilizing, for example, the size of the relevant circle.

The display of each information flake may be performed by utilizing a generally known technology of displaying an incoming call history.

For example, a table that shows a correspondence relationship between the number of incoming calls and the size of the information flake, which is in proportion to the relevant number of incoming calls, is stored in the storage unit 12. The notification information determination unit 3 retrieves the number of the notification information items. Based on the table stored in the storage unit 12, an information flake for the relevant application is displayed in accordance with the number of information items.

Additionally, based on the table stored in the storage unit 12, the notification information determination unit 3 may display the number of notification items together with the relevant information flake.

For example, if one incoming telephone call has been received, the information flake (having a color which indicates that the information is notification information for telephone) may be an image in which numeric character "1" that means "incoming call history number (i.e., the number of history items) 1" is displayed, so as to inform the user of the number of incoming calls for the relevant telephone.

In addition, if five email messages have been received, the information flake (having a color which indicates that the information is notification information for email) may be an image in which numeric character "5" that means "email reception history number 5" is displayed, so as to inform the user of the number of email messages which the user has not yet read.

Similarly, if three schedule items have been registered, the information flake (having a color which indicates that the information is notification information for schedule) may be an image in which numeric character "3" that means "schedule number (i.e., the number of schedule items) 3" is displayed, so as to inform the user of the number of the schedule items.

Each display flake and each information flake may have any color. For example, the display flake has a color having a complementary relationship with the color of the information flake (i.e., both colors face each other on the hue circle (or ring)), or a color similar to the color of the information flake (i.e., both colors are adjacent or close to each other on the hue circle and may have different gray scale values).

Therefore, color of the display and information flakes may be determined by means of color coordination or color psychology. Accordingly, in the display unit 11, each information flake is conspicuous so that the user can easily recognize the information flake, or the entire display unit 11 may have a settled atmosphere.

In order that the user can further easily recognize the information flake, the information flake may blink or the color thereof may be varied.

If the user has not performed for a predetermined period of time, confirmation of the content of notification information by an operation such as tapping the corresponding flake, the shape of the information flake itself may be changed (after the predetermined period of time) to a form that is not similar to the display flake, so as to urge the user to confirm the content of the notification information.

Similarly, if the user has not performed confirmation of the content of notification information for a predetermined period of time, the content of the notification information may be displayed (after the predetermined period of time) on the display unit 11 in a pop-up manner or the like.

In addition, the background of the display unit 11 needs not be plain and may be a human image.

Although the display and information flakes are each a circular image in Fig. 3, this is not an absolute condition. They may each have any form if they produce a feeling of uniformity for which the user does not feel unpleasant.

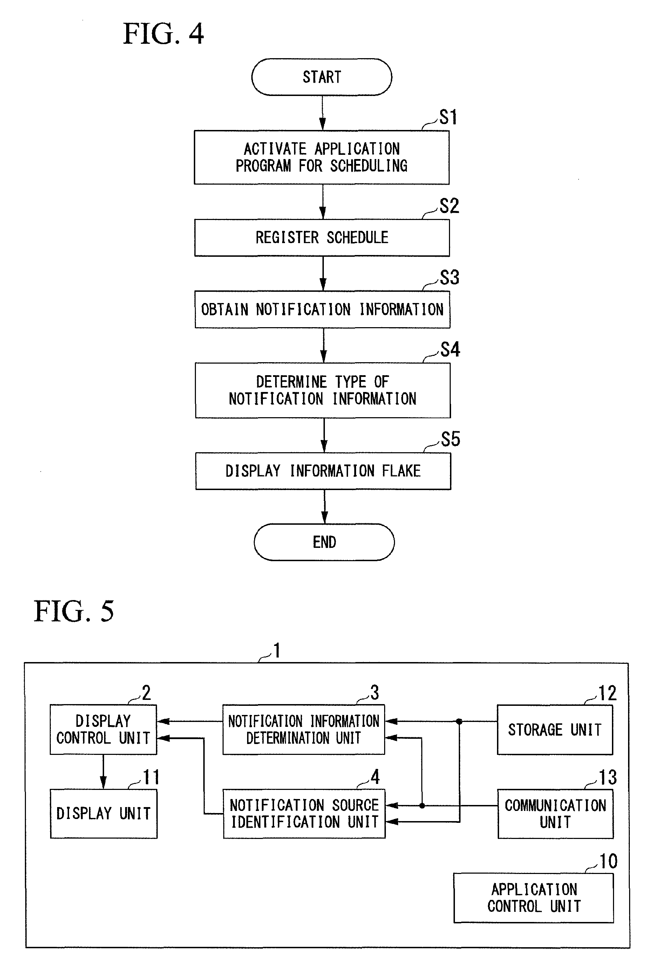

Fig. 4 is a diagram showing an operation flow of the terminal device 1 according to the first embodiment of the present invention.

In the operation flow (of the terminal device 1 according to the first embodiment) explained below, the terminal device 1 informs the user of information such as a schedule which the user registered in the storage unit 12 in advance, an incoming telephone call, email reception, or the like.

First, in order to utilize a schedule function, which is one of the functions of the terminal device 1, the user performs, for example, a user operation such as tapping a schedule application activation icon that is displayed on the touch panel of the terminal device 1. In this process, the display unit 11 has already displayed the display flakes.

Then the application control unit 10 of the terminal device 1 activates an application program for scheduling (i.e., schedule application program) in response to the user operation such as tapping the application activation icon (see step S1).

After the application control unit 10 activates the schedule application program, the user performs a user operation such as character input onto the schedule application program, and the application control unit 10 registers the relevant schedule in the storage unit 12 (see step S2).

After that, the notification information determination unit 3 compares, for example, a set notification time (utilized to communicate the relevant schedule item to the user) with the current time. If both times coincide with each other, the notification information determination unit 3 accesses the storage unit 12 to retrieve the schedule item as the notification information (i.e., information to be communicated to the user). Additionally, every time the communication unit 13 receives email or the like, the notification information determination unit 3 obtains information of the email as the notification information (see step S3).

Every time the notification information determination unit 3 obtains notification information, the notification information determination unit 3 determines, based on the obtained notification information, the type of the notification information and the number of the information items (see step S4) and outputs the determined results for the type and the number of items to the display control unit 2. For example, based on the obtained notification information, the notification information determination unit 3 determines the type of the notification information to be schedule, telephone, email, or the like.

Then the display control unit 2 receives the determined results for the type and the number of items of the notification information from the notification information determination unit 3. Based on the received determined results for the type and the number of items, the display control unit 2 displays on the display unit 11, an information flake having a size and color corresponding to the type (schedule, telephone, email, or the like) and the number of items of the notification information (see step S5).

The operation flow of the terminal device 1 according to the first embodiment has been explained. According to the above-described terminal device 1, the terminal device 1 provides a visual effect to amuse the user by displaying an information flake having a form similar to each display flake on the display unit while the displayed information flake corresponds to the notification information. Therefore, notification information can be communicated to the user in an intuitive and easily understandable manner.

In addition, the terminal device 1 displays each information flake by utilizing a color and a size which correspond to the type of the notification information and the number of items of the notification information. Therefore, the user can intuitively know the type and the amount of information (e.g., the number of items) of the notification information.

### Second embodiment

Fig. 5 is a diagram showing the configuration of the terminal device 1 according to a second embodiment of the present invention.

As shown in Fig. 5, in addition to the terminal device 1 of the first embodiment in Fig. 2, the present terminal device 1 includes a notification source identification unit 4.

In addition to the functions of the first embodiment, the present embodiment has a function of displaying notification source identification information output from the notification source identification unit 4 on the display unit 11 in association with the relevant information flake.

When the notification source identification unit 4 receives notification information which was received by the communication unit 13 or is stored in the storage unit 12, the notification source identification unit 4 (as a functional unit) obtains from the notification information, the notification source identification information that indicates a notification source of the relevant information. The notification source identification unit 4 outputs the notification source identification information to the display control unit 2

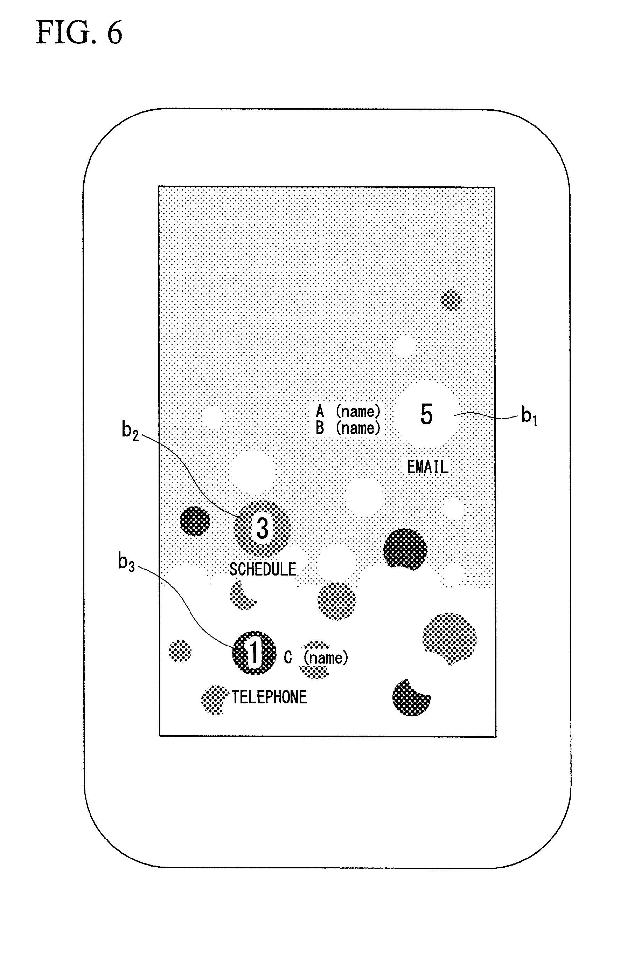

Fig. 6 is a diagram showing an example of an image displayed by the terminal device 1 according to the second embodiment on the display unit 11.

Similar to the terminal device 1 according to the first embodiment, circular images having various sizes and colors are displayed on the display unit 11.

Also similar to the terminal device I according to the first embodiment, each display flake is an image which is displayed on the display unit 11 so as to produce a visual effect even when there is no notification information, that is, even when no information flake is displayed. Thus the display flake is an image which gives a visual effect to the user.

Unlike the terminal device 1 according to the first embodiment, the notification source identification information, which the notification source identification unit 4 obtained and output, is displayed on the display unit 11 in association with the corresponding information flake.

For example, in Fig. 6, an information flake (i.e., a flake-like figure for information) b₁ indicates by utilizing characters that the terminal device 1 has received five email messages and the email messages were sent from "A" (name) and "B".

Similarly, in Fig. 6, an information flake b₃ represents that there was one incoming call and the notification source identification information associated with the telephone call indicates that the call was from "C" (name).

In addition, an information flake b₂ represents that there are three schedule items which the user should confirm.

In the example of Fig. 6, the notification source identification information is displayed next to the corresponding information flake by means of characters. However, it may be displayed inside the circle of the information flake, and the display position of the notification source identification information is not limited. Furthermore, the notification source identification information may be displayed as an icon or an image of the sender (notification source) and thus is not limited to character information.

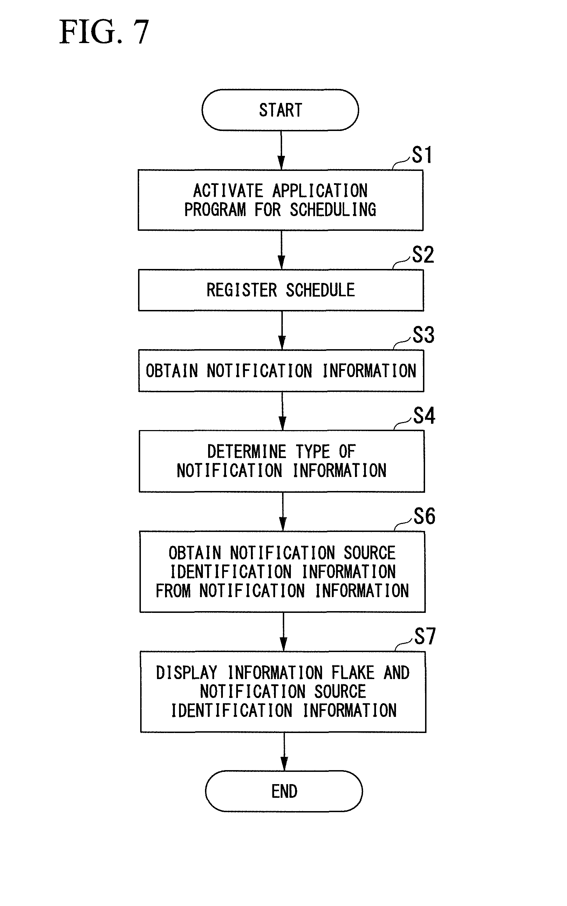

Fig. 7 is a diagram showing an operation flow of the terminal device 1 according to the second embodiment of the present invention.

In the operation flow (of the terminal device 1 according to the second embodiment) explained below, the terminal device 1 informs the user of information such as a schedule registered in the storage unit 12, an incoming telephone call, email reception, or the like.

In the operation flow of the terminal device 1 according to the second embodiment, the processes in steps S1 to S4 for the terminal device 1 of the first embodiment are executed, and after that, processes in steps S6 and S7 are executed. Therefore, the processes in steps S6 and S7 (in Fig. 7) for the terminal device 1 according to the second embodiment will be explained below.

In the operation of the terminal device 1 in the second embodiment, after the processes in steps S1 to S4 for the terminal device 1 of the first embodiment, the notification source identification unit 4 obtains the notification information which was received by the communication unit 13 or is stored in the storage unit 12, similar to the notification information determination unit 3. The notification source identification unit 4 obtains the notification source identification information from the relevant notification information (see step S6). Then the notification source identification unit 4 outputs the obtained notification source identification information to the display control unit 2.

The display control unit 2 receives from the notification information determination unit 3, determination results for the type of the notification information and the number of items for the notification information. Based on the determination results, the display control unit 2 displays on the display unit 11, an information flake having a size and color corresponding to the type (schedule, telephone, email, or the like) and the number of items of the notification information.

In addition, when the display control unit 2 receives notification source identification information from the notification source identification unit 4, the display control unit 2 displays on the display unit 11, the notification source identification information for the information flake associated with this notification source identification information (see step S7).

The operation flow of the terminal device 1 according to the second embodiment has been explained. According to the above-described terminal device 1, the terminal device 1 displays the notification source identification information by means of characters, icons, or images of each sender in association with the relevant information flake, so that the user can intuitively and easily identify the notification information, typically, the notification source of the relevant notification information.

### Third embodiment

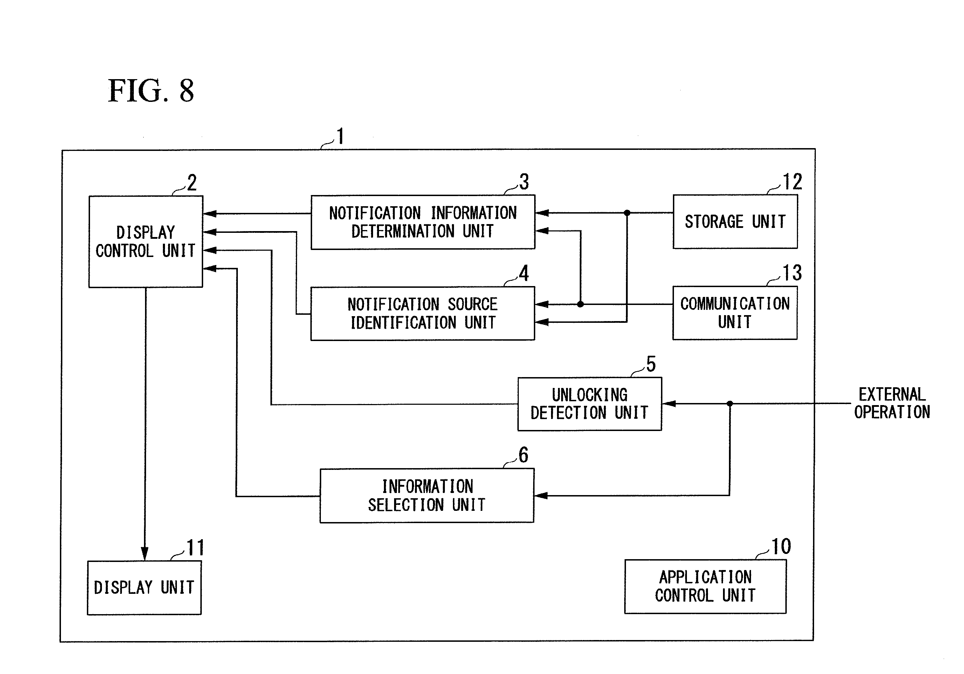

Fig. 8 is a diagram showing the configuration of the terminal device 1 according to a third embodiment of the present invention.

As shown in Fig. 8, in addition to the terminal device 1 of the second embodiment in Fig. 5, the present terminal device 1 includes an unlocking detection unit 5 and an information selection unit 6.

When the terminal device 1 is being set to a state for preventing an erroneous operation, a screen that shows such an erroneous operation prevention state is displayed on the display unit 11. On the screen that shows the erroneous operation prevention state, an unlocking icon is displayed, which is one of display objects as an operation target to be utilized to erase (or clear) the relevant screen. The display control unit 2 according to the third embodiment has a function of displaying the display flake and the information flake on the above erroneous operation prevention screen.

When the unlocking detection unit 5 detects that an unlocking icon 101 has been accessed from the outside of the terminal device 1, the display control unit 2 (as an functional unit) displays an application activation icon which is utilized to execute an application program and has a form identical or similar to that of each display flake.

The display control unit 2 is also a functional unit that displays an information flake at a predetermined position on the display unit 11.

When the information selection unit 6 detects that an information flake has been accessed from the outside of the terminal device 1 so as to select the information flake, the display control unit 2 (as an functional unit) displays based on the information flake detected by the information selection unit 6, information associated with the relevant information flake at a predetermined position on the display unit 11.

The unlocking detection unit 5 is a functional unit which detects that the unlocking icon 101, which is displayed by the display control unit 2 on the erroneous operation prevention screen, has been accessed.

When the unlocking detection unit 5 detects that the unlocking icon 101 has been accessed, the unlocking detection unit 5 (as a functional unit) release the locked state of the terminal device 1.

The information selection unit 6 is a functional unit which detects that an information flake has been accessed.

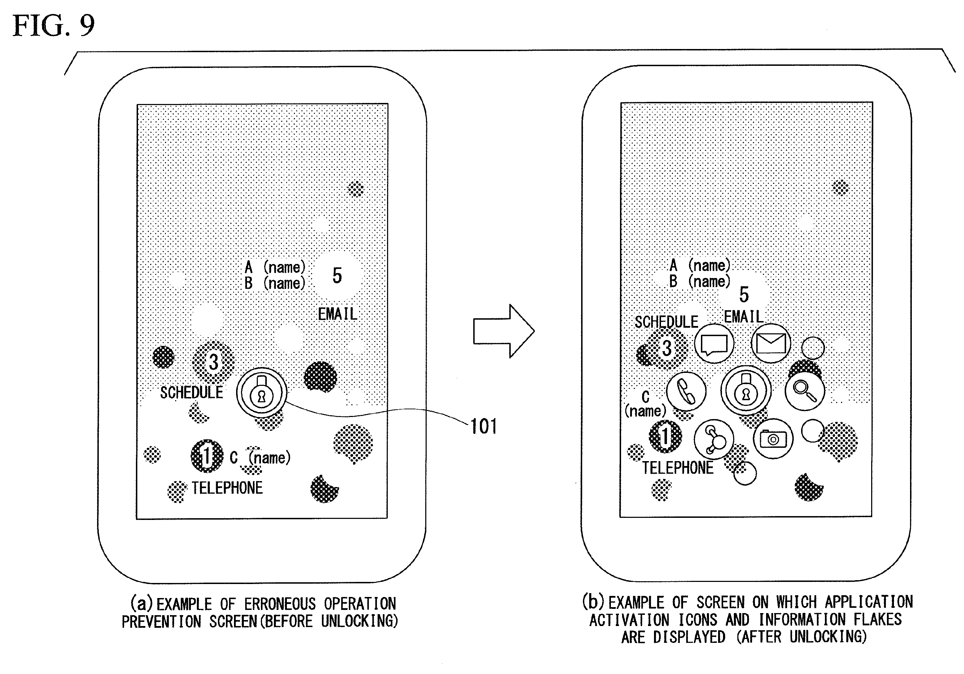

Fig. 9 is a diagram showing an example of an image displayed by the terminal device 1 according to the third embodiment on the display unit 11.

In this figure, part (a) shows an example of the above-described erroneous operation prevention screen (before the device is unlocked, and part (b) shows an example of a screen on which application activation icons and information flakes are displayed.

When the user applies a predetermined operation (e.g., tapping operation or approaching operation) to the unlocking icon 101 on the erroneous operation prevention screen of part (a), the unlocking detection unit 5 detects that the unlocking icon 101 has been accessed. The unlocking detection unit 5 then unlocks the terminal device 1.

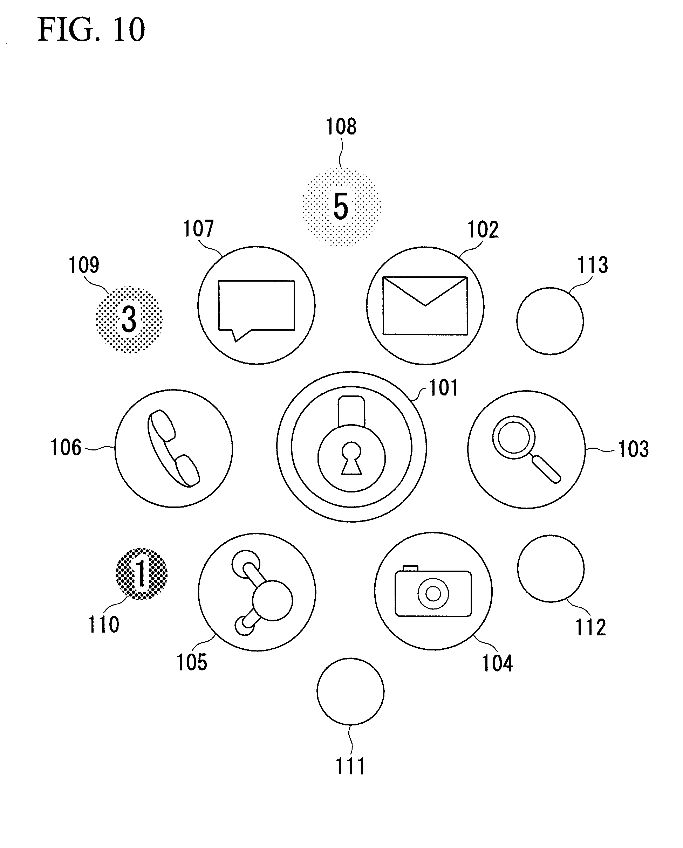

When the display control unit 2 receives an unlocking signal from the unlocking detection unit 5, the display control unit 2 displays around the unlocking icon 101:
(i) application activation icons (i.e., an email activation icon 102, a search activation icon 103, a camera activation icon 104, an SNS activation icon 105, a telephone activation icon 106, and a scheduling activation icon 107, refer to Fig. 10 explained later); and
(ii) information flakes (an email notification information flake 108, a schedule notification information flake 109, a telephone notification information flake 110, an SNS notification information flake 111, a photo notification information flake 112, and a search notification information flake 113, refer to Fig. 10, similarly).

Here, the information flakes and the application activation icons may be displayed in a manner such that they gather from the outer side of the display unit 11 or they are gradually expanded from a state of "small point" on the display unit 11. In other words, the display manner for the change from part (a) to part (b) of Fig. 9 (b) is not limited.

In addition, when the application activation icons are displayed as they gather, the display flakes may be displayed on the display unit 11 as they scatter outward and then disappear from the display unit 11.

Fig. 10 is a diagram showing the unlocking icon 101, the information flakes, and the application activation icons shown in part (b) of Fig. 9.

The unlocking icon 101 is an icon which is also displayed in part (a) of Fig. 9 and is utilized to unlock the terminal device 1 by a predetermined user operation such as tapping the icon. The unlocking icon 101 may be continuously displayed when the terminal device 1 is in the locked state. In another example, the unlocking icon 101 is not displayed in a normal state and is displayed in response to predetermined user operation such as pressing a power button or the like.

The email activation icon 102 is an icon utilized to start an email application program by a predetermined user operation such as tapping the icon, so as to make the email function effective.

The search activation icon 103 is an icon utilized to start a search application program by a predetermined user operation such as tapping the icon, so as to make the Internet search function or a function of searching for files inside or outside of the terminal device 1 effective.

The camera activation icon 104 is an icon utilized to start a camera application program by a predetermined user operation such as tapping the icon, so as to make a function of obtaining a static or video image effective.

The SNS activation icon 105 is an icon utilized to start, for example, an SNS application program by a predetermined user operation such as tapping the icon, so as to make a function of participating in an SNS effective.

The telephone activation icon 106 is an icon utilized to start a telephone application program by a predetermined user operation such as tapping the icon, so as to make the telephone function effective.

The scheduling activation icon 107 is an icon utilized to start a scheduling application program by a predetermined user operation such as tapping the icon, so as to make the scheduling function effective.

The email notification information flake 108 is an information flake utilized to inform the user of email reception which is one of the notification information items. For example, when the user performs a predetermined operation such as tapping the email notification information flake 108, each received email message is displayed so that the user can confirm the message.

In Fig. 10, numeric character "5" in the email notification information flake 108 means that five email message have been received.

The schedule notification information flake 109 is an information flake utilized to inform the user of the schedule which is one of the notification information items. For example, when the user performs a predetermined operation such as tapping the schedule notification information flake 109, each registered schedule item is displayed so that the user can confirm the content of the schedule.

In Fig. 10, numeric character "3" in the schedule notification information flake 109 means that three schedule items have been registered.

The telephone notification information flake 110 is an information flake utilized to inform the user of each incoming call which is one of the notification information items. For example, when the user performs a predetermined operation such as tapping the telephone notification information flake 110, each incoming call is represented so that the user can confirm the content of the call.

In Fig. 10, numeric character "1" in the telephone notification information flake 110 means that one incoming call has been received.

The SNS notification information flake 111 is an information flake utilized to inform the user of SNS message reception which is one of the notification information items. For example, when the user performs a predetermined operation such as tapping the SNS notification information flake 111, each SNS message is displayed so that the user can confirm the message.

Fig. 10 shows that there is no SNS message at present. As shown in Fig. 10, the number of messages is not displayed in the relevant flake.

The photo notification information flake 112 is an information flake utilized to inform the user of each posted photo (that may be posted onto a specific site on the Internet) which is one of the notification information items. For example, when the user performs a predetermined operation such as tapping the photo notification information flake 112, each photo which has not been accessed and displayed by the user is displayed so that the user can confirm the photo.

Fig. 10 shows that there is no posted photo at present. As shown in Fig. 10, the number of photos is not displayed in the relevant flake.

The search notification information flake 113 is an information flake utilized to inform the user of (presence of) a search engine which is one of the notification information items. For example, when the user performs a predetermined operation such as tapping the search notification information flake 113, a search window is displayed so that a target written by the user onto the search window can be newly searched for.

Fig. 10 shows that there is no search engine. As shown in Fig. 10, no numeric character (utilized to indicate the number of search engines) is displayed in the relevant flake.

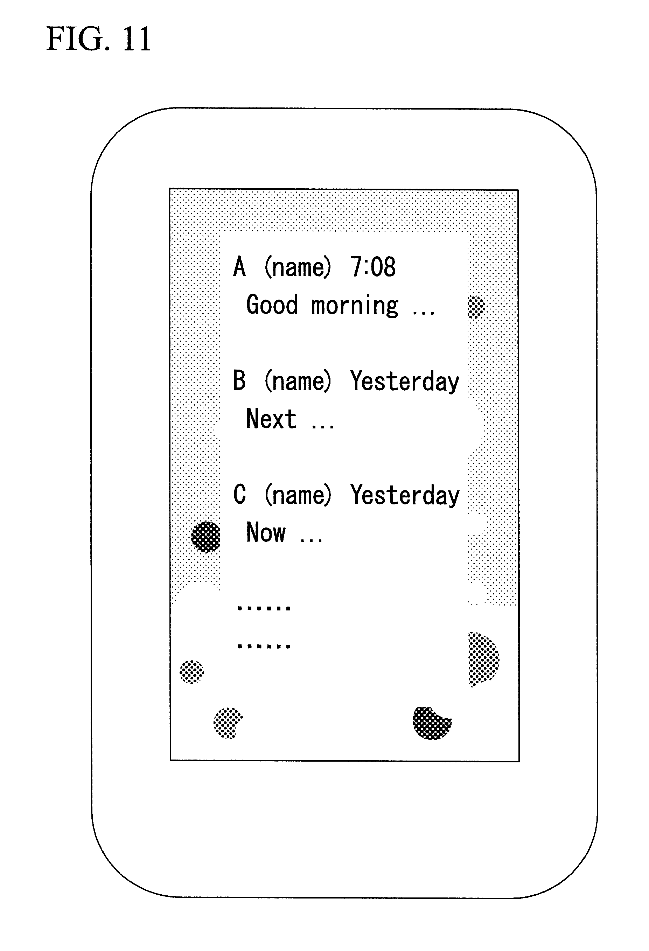

Fig. 11 is an example of display of the display unit 11 when an information flake is selected.

More specifically, Fig. 11 shows a picture displayed on the display unit 11 when the user selects the email notification information flake 108 (see Fig. 10) by a user operation such as tapping the flake.

In the example of Fig. 11, received email messages are displayed on the display unit 11 in order from the newest to the oldest. However, the display manner is not limited to this example. Specifically, a list for each notification source or the newest (one) message may be displayed.

Although Fig. 11 shows the case that the email notification information flake 108 is selected, the selection target is not limited to the email notification information flake 108. When another information flake is selected, detailed information for the selected information flake is displayed.

For the detailed information pertaining to the selected information flake, a list of information items may be displayed on the display unit 11 in order from the newest to the oldest or from the oldest to the newest; a list of information items classified for the individual types may be displayed; or the content of one newest information item may be displayed.

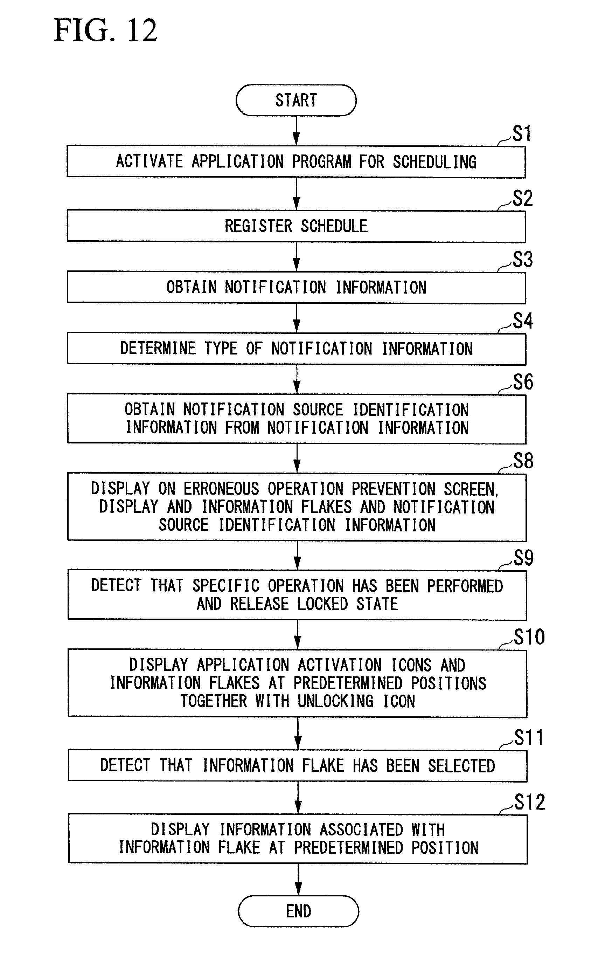

Fig. 12 is a diagram showing an operation flow of the terminal device 1 according to the third embodiment of the present invention.

In the operation flow (of the terminal device 1 (e.g., smartphone) according to the third embodiment) explained below, the terminal device 1 informs the user of information such as a schedule which the user registered in the storage unit 12 in advance, an incoming telephone call, email reception, or the like.

In the operation flow of the terminal device 1 according to the third embodiment, the processes in steps S1 to S6 for the terminal device 1 of the second embodiment are executed, and after that, processes in steps S8 to S12 are executed. Therefore, the processes in steps S8 to S12 (in Fig. 12) for the terminal device 1 according to the third embodiment will be explained below.

In the operation of the terminal device 1 in the third embodiment, after the processes in steps S1 to S6 for the terminal device 1 of the second embodiment, the display control unit 2 receives, while the terminal device 1 is in the erroneous operation prevention state, determination results for the type of the notification information and the number of items of the notification information from the notification information determination unit 3.

In addition, the display control unit 2 displays display flakes at predetermined positions on the erroneous operation prevention screen displayed at the display unit 11. Here, based on the received determination results for the type and the number of items for the notification information, the display control unit 2 displays the information flakes, each having a color and size in accordance with the type (schedule, telephone, email, or the like) and the number of items for the notification information.

Additionally, when the display control unit 2 receives notification source identification information from the notification source identification unit 4, the display control unit 2 displays this notification source identification information at a predetermined position for an information flake associated with the notification source identification information on the erroneous operation prevention screen at the display unit 11 (see step S8).

When the user performs a predetermined user operation onto the unlocking icon 101, the unlocking detection unit 5 detects that the operation onto the unlocking icon 101 has been performed, and the unlocking detection unit 5 unlocks the terminal device 1 (see step S9). The unlocking detection unit 5 then outputs an unlocking signal to the display control unit 2.

When the display control unit 2 receives the unlocking signal from the unlocking detection unit 5, the display control unit 2 displays relevant application activation icons and information flakes at predetermined positions together with the unlocking icon 101 (see step S10).

In this state, if the user selects an information flake by an operation such as tapping the flake, the information selection unit 6 detects that this information flake has been accessed and selected from the outside of the terminal device 1 (see step S11).

Based on the information flake detected by the information selection unit 6, the display control unit 2 displays information (e.g., a list of email messages) associated with the relevant information flake at a predetermined position on the display unit 11 (see step S12).

The operation flow of the terminal device 1 according to the third embodiment has been explained. According to the above-described terminal device 1, when the terminal device 1 detects that the unlocking icon 101 has been accessed from the outside of the terminal device 1, the application activation icons and the information flakes are displayed at predetermined positions. Additionally, when the user selects an information flake, information associated with the information flake is displayed at a predetermined position on the display unit 11.

Accordingly, the user can quickly start each application program or confirm the content of each information flake, and thereby the user's convenience for the terminal device 1 can be improved.

Additionally, according to the operation of the terminal device 1, display objects such as the display flakes, the information flakes, the icons, and the like are displayed on the erroneous operation prevention screen, and thereby a visual effect to amuse the user is provided to the user, and notification information which should be communicated to the user can be intuitively and easily communicated to the user. In particular, since the erroneous operation prevention screen is frequently displayed, it is very important in the state that the erroneous operation prevention screen is displayed, to intuitively and easily communicate the notification information to the user while amusing the user.

### Fourth embodiment

The configuration of the terminal device 1 according to a fourth embodiment of the present invention is identical to the configuration (shown in Fig. 8) of the terminal device 1 of the third embodiment.

The display control unit 2 according to the fourth embodiment is a functional unit that displays various display information items on the display unit 11. Additionally, when the terminal device 1 is in the erroneous operation prevention state, the display control unit 2 (as the functional unit) displays display flakes and information flakes on an erroneous operation prevention screen displayed at the display unit 11.

When the unlocking detection unit 5 detects that an unlocking icon 101 has been accessed from the outside of the terminal device 1, the display control unit 2 (as an functional unit) displays an application activation icon and an information flake, which each have a form identical or similar to that of the display flake and are utilized to execute an application program, at predetermined positions on the display unit 11.

When the information selection unit 6 detects that an information flake has been accessed from the outside of the terminal device 1 so as to select the information flake, the display control unit 2 (as an functional unit) displays based on the information flake detected by the information selection unit 6, information associated with the relevant information flake at a predetermined position on the display unit 11.

The display control unit 2 also has a function of displaying at least one display image among the information flakes, the unlocking icon 101, and the application activation icons on the display unit 11 in a manner such that the relevant display image moves on the display unit 11.

The display control unit 2 further has a selecting function of determining whether or not at least one display image among the information flakes, the unlocking icon 101, and the application activation icons (to be displayed on the display unit 11) is made movable.

If the display control unit 2 determines that at least one display image among the information flakes, the unlocking icon 101, and the application activation icons (to be displayed on the display unit 11) is made movable, the display control unit 2 makes the relevant display image movable. If the display control unit 2 determines that no image to be displayed is made movable, the display control unit 2 makes none of the information flakes, the unlocking icon 101, and the application activation icons (which are displayed on the display unit 11) movable.

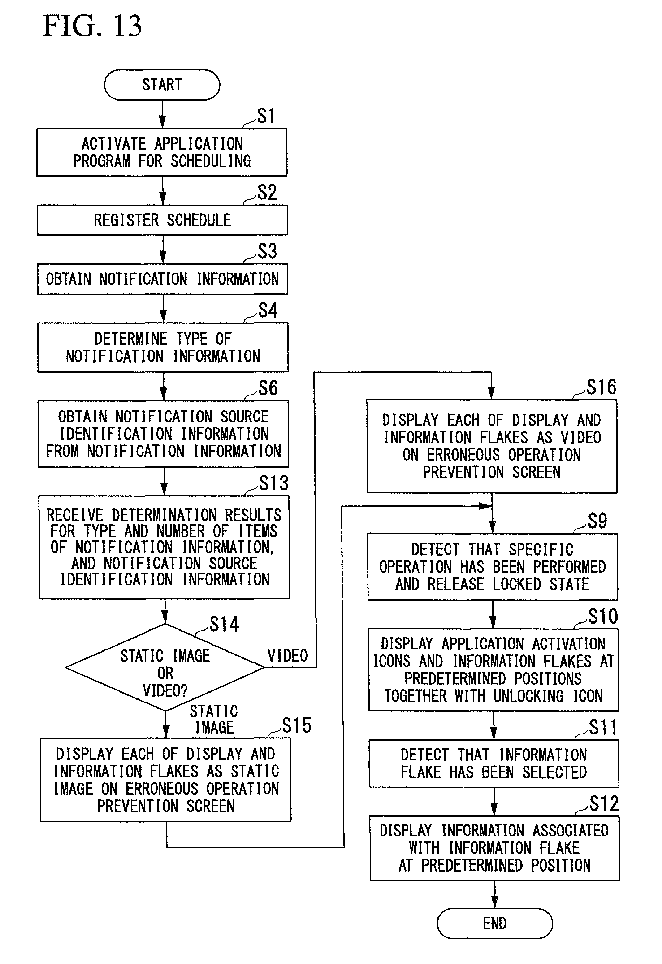

Fig. 13 is a diagram showing an operation flow of the terminal device 1 according to the fourth embodiment of the present invention.

In the operation flow (of the terminal device 1 (e.g., smartphone) according to the fourth embodiment) explained below, the terminal device 1 informs the user of information such as a schedule which the user registered in the storage unit 12 in advance, an incoming telephone call, email reception, or the like.

In the operation flow of the terminal device 1 according to the fourth embodiment, the processes in steps S1 to S6 for the terminal device 1 of the third embodiment are executed, and after that, processes in steps S13 to S16 are executed and then steps S9 to S 12 for the terminal device 1 of the third embodiment are further executed. Therefore, the processes in steps S13 to S16 (in Fig. 13) for the terminal device 1 according to the fourth embodiment will be explained below.

In the operation of the terminal device 1 in the fourth embodiment, after the processes in steps S1 to S6 for the terminal device 1 of the third embodiment, the display control unit 2 receives, while the terminal device 1 is in the erroneous operation prevention state, determination results for the type of the notification information and the number of items of the notification information from the notification information determination unit 3. The display control unit 2 also receives notification source identification information from the notification source identification unit 4 (see step S13).

Then the display control unit 2 determines whether a static image or a video is employed to display (i) the relevant display and information flakes or (ii) the information flake (no determination is performed for the display flake) on the erroneous operation prevention screen (see step S 14).

For example, after the display control unit 2 receives the determination results for the type of the notification information and the number of items of the notification information from the notification information determination unit 3 and also the notification source identification information from the notification source identification unit 4, a menu utilized to select one of the static image or the video is displayed on the display unit 11 so that the user taps one of the static image or the video to select the tapped one. According to the user's selection, the display control unit 2 determines that the static image or the video is displayed on the display unit 11.

If the user selects the static image, the display control unit 2 displays each of the display and information flakes, or the information flake, as a static image on the erroneous operation prevention screen (see step S 15).

If the user selects the video, the display control unit 2 displays each of the display and information flakes, or the information flake, as a video on the erroneous operation prevention screen (see step S16).

In the operation flow of Fig. 13, after the process in step S 15 or S16, the processes from step S9 to S12 are executed.

In the above operation flow of the terminal device 1 according to the fourth embodiment, the display control unit 2 determines in steps S 14 to S16, whether static image display or video display is performed on the erroneous operation prevention screen.

However, through the entire operation flow, the display control unit 2 may determine whether static image display or video display is applied to each target in the individual steps that display each information flake, the unlocking icon 101, or each application activation icon.

In another example, the user determines whether static image display or video display is employed and stores the determined result in the storage unit 12. Based on the relevant data stored in the storage unit 12, the display control unit 2 may determine whether static image display or video display is employed.

The operation flow of the terminal device 1 according to the fourth embodiment has been explained. According to the above-described terminal device 1, the terminal device 1 can display each information flake, the unlocking icon 101, or each application activation icon as a static image, and thereby the user can easily recognize the information flake or operate the icon. The terminal device 1 can also display each information flake, the unlocking icon 101, or each application activation icon as a video, and thereby a visual effect to amuse the user is further provided to the user.

In the embodiments of the present invention, the display unit 11 is not limited to one provided at the terminal device 1. Any device such as an external display device may be utilized.

Additionally in the embodiments of the present invention, the operation to designate a display object or the like is not limited to a tapping operation. Any operation such as an approaching operation or an operation utilizing keys may be employed to designate a display object.

In the relevant embodiments, information items to be received or set is not limited to those described in the embodiments. Any information which can be received or set by the terminal device 1 can be utilized.

In the relevant embodiments, the shape of each display flake and each information flake is not limited to the circle. Any shape such as a rectangle or a star may be utilized if the flakes have shapes similar to each other.

In the relevant embodiments, the size of each information flake is changed according to the amount of information for the notification information. Instead thereof, the number of information flakes may be changed. For example, one information flake is applied to one reception information (e.g., for email) and the number of information flakes is changed according to the number of reception information items.

The embodiments of the present invention has been explained above. The above-described terminal device 1 includes a computer system. The processes of the above-described steps are stored as a program in a computer-readable storage medium, and the processes are performed when the relevant computer loads and executes the program.

The above computer readable storage medium is a magnetic disk, magneto optical disk, CD-ROM, DVD-ROM, semiconductor memory, or the like.

In addition, the relevant computer program may be provided to a computer via a communication line, and the computer which received the program may execute the program.

In addition, the program may execute a part of the above-described functions. The program may also be a "differential file" (differential program) so that the above-described functions can be executed by a combination program of the differential program and an existing program which has already been stored in the relevant computer system.

Priority is claimed on Japanese Patent Application No. 2012-278141, filed December 20,2012, the contents of which are incorporated herein by reference.

### INDUSTRIAL APPLICABILITY

In accordance with the present invention, when each schedule or the reception of information such as email messages is communicated to the user, a visual effect can be provided to the user. Therefore, the notification information can be intuitively and easily communicated to the user.

### Reference symbols

- 1: terminal device
- 2: display control unit
- 3: notification information determination unit
- 4: notification source identification unit
- 5: unlocking detection unit
- 6: information selection unit
- 10: application control unit
- 11: display unit
- 12: storage unit
- 13: communication unit
- 101: unlocking icon
- 102: email activation icon
- 103: search activation icon
- 104: camera activation icon
- 105: SNS activation icon
- 106: telephone activation icon
- 107: scheduling activation icon
- 108: email notification information flake
- 109: schedule notification information flake
- 110: telephone notification information flake
- 111: SNS notification information flake
- 112: photo notification information flake
- 113: search notification information flake
- a₁, a₂, a₃, a₄, a₅: display flake
- b₁, b₂, b₃: information flake

## Claims

1. A terminal device comprising:
a display control unit that displays on a display unit, a display flake having a predetermined form to produce a visual effect and an information flake which indicates that there is notification information to be communicated to a user, where the information flake has a form identical or similar to the form of the display flake.

2. The terminal device in accordance with claim 1, wherein:
a plurality of the information flakes corresponding to different items of the notification information are displayed;
the terminal device further comprises a notification information determination unit that determines a type of the notification information and/or an amount of information for each item of the notification information; and
the display control unit displays each information flake on the display unit in a manner such that the information flake has one or both of color and size which changes according to the type of the notification information and/or the amount of information for the notification information determined by the notification information determination unit.

3. The terminal device in accordance with claim 1 or 2, further comprising:
a notification source identification unit that obtains notification source identification information, which indicates a notification source of the notification information, from the notification information and outputs the obtained information;
wherein the display control unit displays the notification source identification information output from the notification source identification unit, in association with the information flake.

4. The terminal device in accordance with any one of claims 1 to 3, wherein:
the display control unit displays one of both the display flake and the information flake, and the information flake of these flakes, on an erroneous operation prevention screen which is displayed on the display unit and utilized to prevent an erroneous operation.

5. The terminal device in accordance with claim 4, further comprising:
an unlocking detection unit which detects that a display object, which is displayed by the display control unit on the erroneous operation prevention screen and is an operation target utilized to erase the erroneous operation prevention screen, has been accessed from outside of the terminal device,
wherein when the unlocking detection unit detects that the display object has been accessed from the outside of the terminal device, the display control unit displays at a predetermined position of the display unit, an application activation display object which is utilized to execute a predetermined application program and has a form identical or similar to that of the display flake.

6. The terminal device in accordance with claim 4, further comprising:
an unlocking detection unit which detects that a display object, which is displayed by the display control unit on the erroneous operation prevention screen and is an operation target utilized to erase the erroneous operation prevention screen, has been accessed from outside of the terminal device,
wherein when the unlocking detection unit detects that the display object has been accessed from the outside of the terminal device, the display control unit displays the information flake at a predetermined position of the display unit.

7. The terminal device in accordance with any one of claims 1 to 6, further comprising:
an information selection unit which detects that the information flake has been accessed from outside of the terminal device,
wherein when the information selection unit detects that the information flake has been accessed from the outside of the terminal device, the display control unit displays based on the information flake, information associated with the information flake, at a predetermined position of the display unit.

8. The terminal device in accordance with any one of claims 1 to 7, wherein:
the display control unit displays at least one display image among the information flake, a display object as an operation target utilized to erase an erroneous operation prevention screen configured to prevent an erroneous operation, and an application activation display object utilized to execute a predetermined application program in a manner such that the display image is movable on the display unit.

9. The terminal device in accordance with claim 8, wherein:
the display control unit selects whether or not at least one display image among the information flake, the display object, and the application activation display object is displayed in a movable manner;
if it is selected that the display image is displayed in the movable manner, the display image is made movable; and
if it is selected that the display image is displayed in no movable manner, none of the information flake, the display object, and the application activation display object to be displayed is made movable.

10. An information processing method comprising:
displaying on a display unit, a display flake having a predetermined form to produce a visual effect and an information flake which indicates that there is notification information to be communicated to a user, where the information flake has a form identical or similar to the form of the display flake.

11. A program utilized to make a computer of a terminal device function as:
a display control device that displays on a display unit, a display flake having a predetermined form to produce a visual effect and an information flake which indicates that there is notification information to be communicated to a user, where the information flake has a form identical or similar to the form of the display flake.
